# EUROPEAN PATENT APPLICATION

(11) **EP 4 691 750 A1**
(43) Date of publication of application: **11.02.2026**
(21) Application number: 25179322.0
(22) Date of filing: 28.05.2025
(51) Int. Cl.: B30B 11/00, B30B 15/28, G01H 1/00, G05B 19/4065, G01N 29/00, B30B 11/08

(54) **INSPECTION DEVICE FOR MOLDED PRODUCT PRODUCING MACHINE**

(30) Priority: 05.08.2024 JP 2024129072
(71) Applicant: Kikusui Seisakusho Ltd., Nakagyo-ku Kyoto-shi Kyoto 604-8483 (JP)
(72) Inventor: SUZUKI, Hiroshi, Kyoto, 604-8483 (JP); FUJII, Syuhei, Kyoto, 604-8483 (JP)
(74) Representative: TBK

(57) **Abstract**

An inspection device (S) is configured to detect an indication of abnormality occurred to a predetermined member of a machine used for production of a molded product from a powdery material, the inspection device (S) including an AE sensor (S1) detachably attached to the predetermined member of the machine or a portion adjacent to the predetermined member, and a controller (S3) configured to receive a signal outputted from the AE sensor (S1) disposed at the predetermined member of the machine or the portion adjacent to the predetermined member during operation of the machine, determine whether the predetermined member has an indication of abnormality in accordance with the signal, and output information on a result of determination.

## Description

### Field of the Invention

The invention relates to an inspection device configured to detect an indication of a malfunction before a machine configured to mold a powdery material to obtain a molded product has the malfunction.

### Background of the Invention

There has been known a rotary compression molding machine (see JP 2023-101294 A or the like) which includes a die table of a turret having die bores, and an upper punch and a lower punch slidably retained above and below each of the die bores, and which is configured to horizontally rotate the die bores and the punches together and compression mold a powdery material filled in the die bores when the paired upper and lower punches pass between an upper roll and a lower roll to obtain molded products. The compression molding machine of this type is applied to mass-production of pharmaceutical tablets, food products, electronic components, and the like.

While the compression molding machine is operating to produce molded products, a compressing roll configured to press a punch, members such as a shaft rotatably supporting a roll, a bearing, a block supporting each end of the shaft receive large external force, and large stress is locally applied. The same applies to a cam rail configured to guide a punch while vertically shifting the punch, and the like. Deformation or damage of these members due to time degradation may affect production of molded products.

Conducted at a production site are corrective maintenance including replacing any member upon recognition of damage to the member and preventive maintenance including periodically inspecting and replacing a member even without recognition of damage to the member. However, the corrective maintenance is merely an unexpected countermeasure and it is difficult to keep a high machine operation rate only with the corrective maintenance. The preventive maintenance, which facilitates planning and prospecting, may disadvantageously cause cost increases due to excessively frequent inspections and replacement of still available members. It is not easy to distinguish appropriate unwasteful spans of inspection and replacement.

The above problems apply to machines other than compression molding machines, such as a mixing machine configured to mix a plurality of types of powdery materials, and general machines relevant to solid dosages including a granulator and a particle size selector configured to crush and granulate into a desired particle diameter.

### Summary of the Invention

The invention is to provide a highly convenient inspection device configured to detect an indication of a malfunction before a machine configured to mold a powdery material to obtain a molded product has the malfunction.

The invention provides an inspection device configured to detect an indication of abnormality occurred to a predetermined member of a machine used for production of a molded product from a powdery material, the inspection device including: an acoustic emission (AE) sensor detachably attached to the predetermined member of the machine or a portion adjacent to the predetermined member; and a controller configured to receive a signal outputted from the AE sensor disposed at the predetermined member of the machine or the portion adjacent to the predetermined member during operation (including actual operation to produce an originally intended molded product, or other trial operation) of the machine, determine whether the predetermined member has an indication of abnormality in accordance with the signal, and output information on a result of determination.

A powdery material is an aggregate of minute solids and conceptually includes an aggregate of particles such as so-called granules and an aggregate of powder smaller than such particles. A mixture of a plurality of powdery materials also corresponds to a powdery material. AE is a phenomenon that strain energy having been accumulated is released when a solid is deformed or destructed, and part of the strain energy is radiated as an elastic wave. Specific examples of AE include creak sound generated from wood that is deformed or is about to be bent, and a tin cry phenomenon of generating sound due to tin twin deformation (large-scale shear deformation occurring discontinuously and at high speed). The AE sensor senses such an AE wave.

The inspection device according to the invention detects and notifies of a fact that an indication of abnormality has appeared to a member constituting a machine at a stage of appearance of the indication. This enables predictive maintenance (anticipatory maintenance) such as replacement of members at appropriate timing without corrective maintenance or preventive maintenance and can improve a machine operation rate without any increase in cost, so as to contribute to efficient mass production of normal molded products.

In a case where the machine is a rotary compression molding machine including a die table having die bores penetrating the die table and an upper punch and a lower punch slidably retained above and below each of the die bores, the compression molding machine configured to horizontally rotate the die table and the punches to compression mold a powdery material filled in the die bore when the upper punch and the lower punch being paired pass between an upper roll and a lower roll, a large load is applied to the roll in the compression molding machine or a member rotatably supporting the roll. The roll or the member supporting the roll may thus be deformed or damaged significantly enough to impede production of normal molded products. In view of this, the AE sensor is detachably attached to the roll in the compression molding machine, the member rotatably supporting the roll, or a portion adjacent to the roll or the member rotatably supporting the roll, and the controller receives a signal outputted from the AE sensor during operation of the compression molding machine, determines whether the roll or the member rotatably supporting the roll has an indication of abnormality in accordance with the signal, and outputs information on a result of determination. Accordingly, an indication of abnormality impeding production of normal molded products is detected and notified at a stage before the member has the abnormality, to urge replacement or the like of the target member.

Furthermore, in the case where the machine is a rotary compression molding machine including a die table having die bores penetrating the die table, and an upper punch and a lower punch slidably retained above and below each of the die bores, and configured to horizontally rotate the die table and the punches to compression mold a powdery material filled in the die bores when the upper and lower punches being paired pass between an upper roll and a lower roll, a large load is applied to a cam rail configured to guide the punches while vertically shifting the punches in the compression molding machine. The cam rail may thus be deformed or damaged largely enough to impede production of normal molded products. In view of this, the AE sensor is detachably attached to the cam rail configured to guide the punches while vertically shifting the punches in the compression molding machine, and the controller receives a signal outputted from the AE sensor during operation of the compression molding machine, determines whether the cam rail has an indication of abnormality in accordance with the signal, and outputs information on a result of determination. Accordingly, an indication of abnormality impeding production of normal molded products is detected and notified at a stage before the cam rail has the abnormality, to urge replacement or the like of the target member.

The controller stores and retains a determination threshold assuming, as a reference, sound or vibration measured by the AE sensor when an individual of the machine as an inspection target is new or operates normally. In this state, the controller receives a signal outputted from the AE sensor disposed at the predetermined member of the machine or the portion adjacent to the predetermined member during operation of the machine, and determines whether the member has an indication of abnormality by comparison between a value obtained in accordance with the signal and the determination threshold.

The inspection device according to the invention preferably includes a display configured to display on a screen or a printer configured to print, the information outputted from the controller on the result of the determination of whether the predetermined member has an indication of abnormality. Moreover, the inspection device according to the invention is preferred to be manually portable along with the AE sensor and the controller.

### Effects of the Invention

The invention can achieve a highly convenient inspection device configured to detect an indication of a malfunction before a machine configured to mold a powdery material to obtain a molded product has the malfunction.

### Brief description of the drawings

Fig. 1 is a side sectional view of a rotary compression molding machine as an inspection target in an embodiment of the invention.
Fig. 2 is a top view of a turret of the compression molding machine.
Fig. 3 is a developed view showing a flow of molding a molded product by the compression molding machine and vertical shifts of punches along with rotation of the turret.
Fig. 4 is a configuration diagram of rolls and a load cell included in the compression molding machine.
Fig. 5 is a perspective view of an inspection device according to the embodiment.
Fig. 6 is a perspective view showing a state where an AE sensor of the inspection device according to the embodiment is disposed at a roll part of the compression molding machine.
Fig. 7 is a perspective view showing a state where the AE sensor of the inspection device according to the embodiment is disposed at a cam rail part of the compression molding machine.
Fig. 8 is a graph indicating a waveform of sound or vibration measured by the AE sensor of the inspection device according to the embodiment.
Fig. 9 is a graph indicating another waveform of sound or vibration measured by the AE sensor of the inspection device according to the embodiment.

### Description of the preferred embodiment

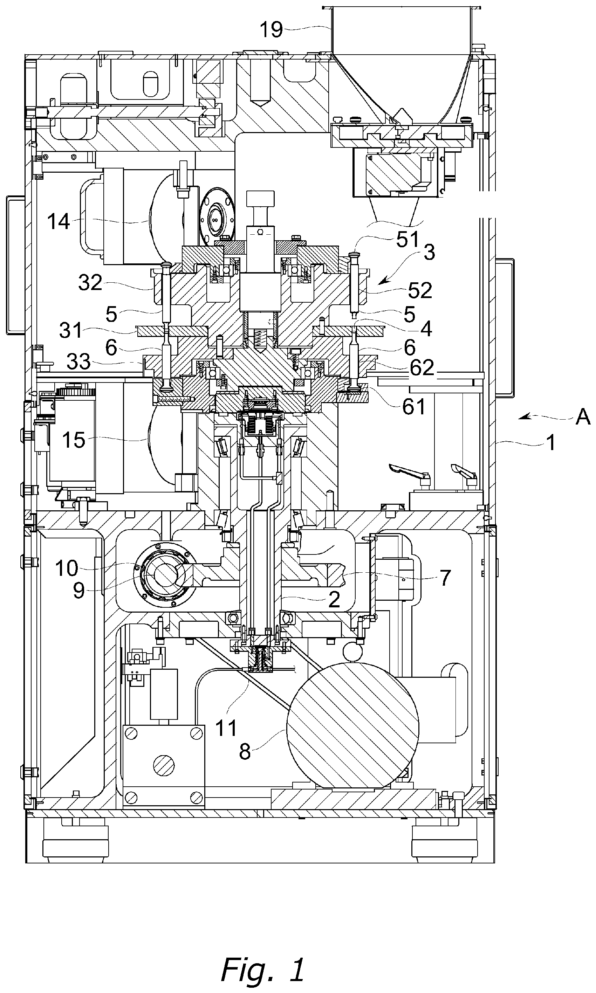

An embodiment of the invention will now be described with reference to the drawings. Initially described is an overview of an entire rotary compression molding machine (hereinafter, referred to as "molding machine") A according to the embodiment, which is applied to production of molded products. As shown in Fig. 1, a molding machine A includes a frame 1 accommodating an upright shaft 2 functioning as a rotary shaft and a turret 3 attached to a connection portion that is disposed at the top of the upright shaft 2.

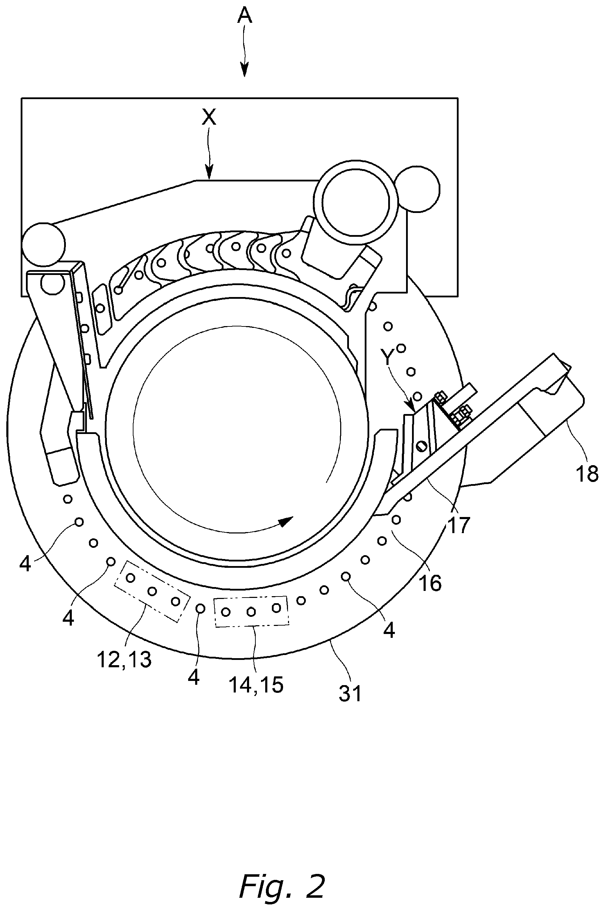

The turret 3 horizontally rotates about the upright shaft 2, more specifically, spins. The turret 3 includes a die table (die disc) 31, an upper punch retaining portion 32, and a lower punch retaining portion 33. As shown in Fig. 2, the die table 31 has a substantially circular disc shape and has a plurality of die bores 4 that are disposed in an outer circumferential portion and is aligned in a rotation direction at predetermined intervals. Each of the die bores 4 vertically penetrates the die table 31. The die table 31 may alternatively be divided into a plurality of plates. Instead of the die bores 4 formed by directly drilling the die table 31, the die table 31 may alternatively have a plurality of die members that are separate from the die table 31 and is detachably attached to the die table 31. In this case, each of the die members has a die bore penetrating vertically.

The die bores 4 each have an upper punch 5 and a lower punch 6 disposed above and below the die bore 4. The upper punch 5 and the lower punch 6 are retained by the upper punch retaining portion 32 and the lower punch retaining portion 33 so as to be independently slidable vertically with respect to corresponding one of the die bores 4. The upper punches 5 each have a tip 53 that enters and exits a corresponding one of the die bores 4. The lower punches 6 each have a tip 63 that is kept inserted in corresponding one of the die bores 4. The upper punches 5 and the lower punches 6 horizontally rotate, more specifically revolve, about the upright shaft 2 along with the turret 3 and the die bores 4.

The upright shaft 2 has the lower end to which a worm wheel 7 is attached. The worm wheel 7 meshes with a worm gear 10. The worm gear 10 is fixed to a gear shaft 9 that is driven by a motor 8. Drive power outputted from the motor 8 is transmitted to the gear shaft 9 through a belt 11, so as to drive to rotate the upright shaft 2 by way of the worm gear 10 and the worm wheel 7, and further to rotate the turret 3 and the punches 5 and 6.

A powdery material as a raw material for a compression molded product like a pharmaceutical tablet is fed from a powdery material feeding device (not shown) to a hopper 19, and is fed from the hopper 19 to a feeder X. The hopper 19 is detachably attached to the molding machine A. The powdery material is filled into the die bores 4 from the feeder X. Examples of the feeder X include an agitated feeder and a gravity feeder, either one of which is applicable to the invention.

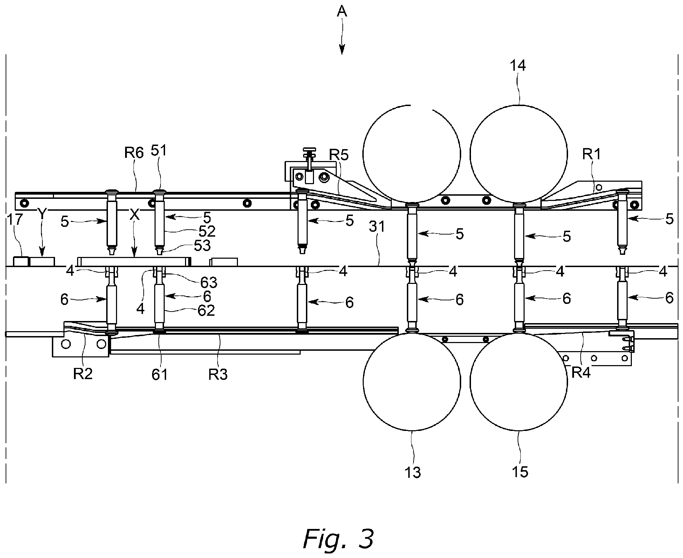

As shown in Figs. 2 and 3, a preliminary compression upper roll 12, a preliminary compression lower roll 13, a substantial compression upper roll 14, and a substantial compression lower roll 15 are disposed on orbits of the punches 5 and 6 that revolve about the upright shaft 2. The preliminary compression upper roll 12 and the preliminary compression lower roll 13 are paired to vertically sandwich the punches 5 and 6, and the substantial compression upper roll 14 and the substantial compression lower roll 15 are paired to vertically sandwich the punches 5 and 6. The preliminary compression upper roll 12 and the preliminary compression lower roll 13 as well as the substantial compression upper roll 14 and the substantial compression lower roll 15 bias the upper and lower punches 5 and 6 to bring the upper and lower punches 5 and 6 closer to each other, so that tip end surfaces of the tips 53 and 63 compress from above and below the powdery material filled in the die bores 4.

The upper and lower punches 5 and 6 have heads 51 and 61 pressed by the rolls 12, 13, 14, and 15, and trunks 52 and 62 smaller in diameter than the heads 51 and 61. The upper punch retaining portion 32 of the turret 3 vertically slidably retains the trunks 52 of the upper punches 5, whereas the lower punch retaining portion 33 vertically slidably retains the trunks 62 of the lower punches 6. The tips 53 and 63 as distal ends of the trunks 52 and 62 are thinner than the remaining portions and have diameters substantially equal to an inner diameter of the die bores 4 so as to be inserted to the die bores 4. The punches 5 and 6 revolve to cause the rolls 12, 13, 14, and 15 to come closer to the heads 51 and 61 of the punches 5 and 6. The rolls 12, 13, 14, and 15 come into contact with the heads 51 and 61 to step thereupon. The rolls 12, 13, 14, and 15 further press the upper punches 5 downward and press the lower punches 6 upward. While the rolls 12, 13, 14, and 15 are in contact with flat surfaces of the punches 5 and 6, the punches 5 and 6 keep applying constant pressure to the powdery material in the corresponding die bores 4.

There is a collecting position for completed molded products, in a downstream portion ahead, in a rotation direction of the turret 3 and the punches 5 and 6, of a position pressed by the substantial compression upper roll 14 and the substantial compression lower roll 15. The collecting position has a guide member (or a scraper) 17.

Vertical motion of the upper and lower punches 5 and 6 is caused by cam rails R1, R2, R3, R4, R5, and R6. The rails R1, R2, R3, R4, R5, and R6 extend along the direction of rotation of the turret 3 and the punches 5 and 6, and are engaged with the heads 51 and 61 of the punches 5 and 6 to guide and vertically shift the punches 5 and 6.

As shown in Fig. 3, the head 51 of each of the upper punches 5 has a revolution orbit including the ascending rail (ascending cam) R1 configured to lift the upper punch 5 upward at a position upstream of the guide member 17 and extract the tip 53 from the die bore 4, and the descending rail (descending cam) R5 configured to push the upper punch 5 downward at a position upstream of the rolls 12 and 14 and insert the tip 53 to the die bore 4 to be ready for later compression of the powdery material.

The head 61 of each of the lower punches 6 has a revolution orbit including the push-up rail R4 configured to lift the lower punch 6 upward at a position upstream of the guide member 17 to allow the tip 63 to be substantially as high as the upper surface of the die table 31, the lowering unit R2 configured to pull the lower punch 6 downward at a position upstream of or adjacent to the feeder X to set volume of the die bore 4 above the tip 63 to correspond to the quantity of the powdery material as a constituent material for the molded product, and the quantity control rail R3 configured to slightly lift the lower punch 6 upward at a position downstream of the feeder X to finely adjust the quantity of the powdery material to be filled in the die bore 4. The quantity control rail R3 has a latter half shaped to slightly pull the lower punch 6 downward to prevent the powdery material having been adjusted in quantity and filled in the die bore 4 from spilling from the die bore 4 due to centripetal force or the like.

A process of producing a molded product will be described roughly. As shown in Fig. 3, the lower punch 6 initially descends and the spray device Y sprays the lubricant toward the inner circumferential surface of the die bore 4 into which the tip 63 of the lower punch 6 is inserted, the upper end surface of the tip 63 of the lower punch 6, and the lower end surface of the tip 53 of the upper punch 5. The feeder X fills, with a powdery material, the die bore 4 into which the tip 63 of the lower punch 6 is inserted. The lower punch 6 ascends and the powdery material overflowing the die bore 4 is leveled such that the die bore 4 is filled with required quantity of the powdery material.

The upper punch 5 then descends, and the preliminary compression upper roll 12 and the preliminary compression lower roll 13 press the head 51 of the upper punch 5 and the head 61 of the lower punch 6 such that the tips 53 and 63 of the punches 5 and 6 preliminarily compress the powdery material in the die bore 4. The substantial compression upper roll 14 and the substantial compression lower roll 15 subsequently press the head 51 of the upper punch 5 and the head 61 of the lower punch 6, such that the tips 53 and 63 of the punches 5 and 6 substantially compress the powdery material in the die bore 4.

The lower punch 6 eventually ascends until the upper end surface of the tip 63 of the lower punch 6 ascends to be substantially as high as an upper end of the die bore 4, i.e. the upper surface of the die table 31, and pushes the molded product out of the die bore 4 onto the die table 31. The molded product ejected from the die bore 4 is brought into contact with and is scraped by the guide member 17 at a product unloading portion 16 due to rotation of the turret 3, and shifts along the guide member 17 toward a molded product chute 18.

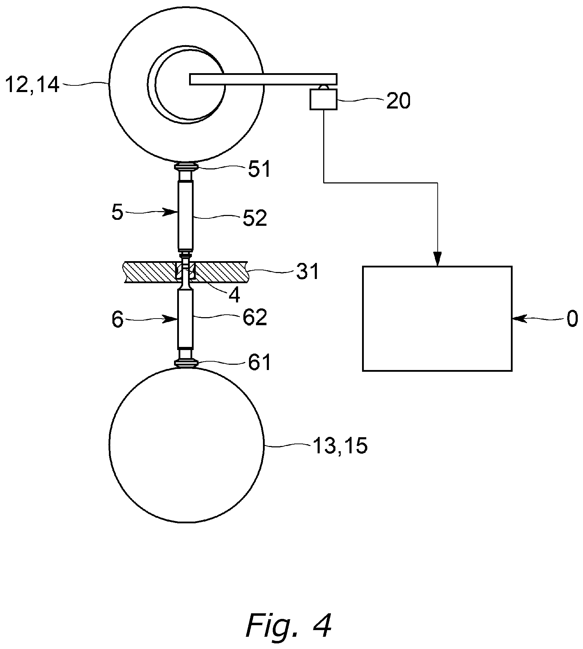

As shown in Fig. 4, the upper rolls 12 and 14 of the molding machine A each have a load cell 20 configured to detect pressure applied to compress the powdery material in the die bore 4 by the rolls 12, 13, 14, and 15 via the punches 5 and 6. The load cell 20 outputs a signal that forms a pulse signal train having a peak when each of the pairs of punches 5 and 6 compresses the powdery material in corresponding one of the die bores 4 with maximum pressure. Reference to output signals of the load cells 20 enables obtaining magnitude of pressure (preliminary compression pressure) applied to compress the powdery material by the preliminarily compression rolls 12 and 13 and magnitude of pressure (substantial compression pressure) applied to compress the powdery material by the substantial compression rolls 14 and 15.

The molding machine A includes a control unit 0 configured to control operation of the molding machine A. Examples of the control unit 0 include a programmable logic controller, as well as a microcomputer system, a personal computer, and a workstation each of which includes a processor, a memory, an auxiliary storage device (e.g., a nonvolatile memory such as a flash memory or a solid state drive (SSD)), an input/output interface, and the like. The control unit 0 reads a program preliminarily stored in the auxiliary storage device into the processor via the memory, causes the processor to decode the program, and controls the molding machine A.

The control unit 0 of the molding machine A receives a signal outputted from a rotary encoder configured to detect rotational speed of the turret 3 and the punches 5 and 6 during operation of the molding machine A, and signals outputted from the load cells 20 configured to detect magnitude of pressure to compress the powdery material by the rolls 12, 13, 14, and 15 via the punches 5 and 6 during operation of the molding machine A, controls rotational speed of the motor 8 of the molding machine A, and also adjusts the rotational speed of the turret 3 and the punches 5 and 6.

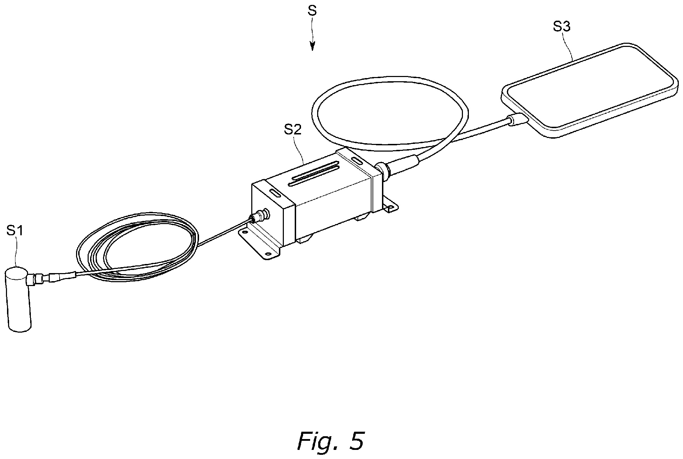

The embodiment provides an inspection device S used for predictive maintenance (anticipatory maintenance) of detecting any indication of abnormality occurred to a predetermined member of the molding machine A. As shown in Fig. 5, the inspection device S according to the embodiment includes an AE sensor S1 configured to sense an AE wave as an elastic wave propagating in an object, a preamplifier S2 configured to amplify an AE signal outputted from the AE sensor S1 having sensed the AE wave or remove unnecessary noise from the signal, and a controller S3 configured to receive a signal outputted from the AE sensor S1 via the preamplifier S2 and determine in accordance with the signal whether the predetermined member of the molding machine A has any indication of abnormality. The AE sensor S1, the preamplifier S2, and the controller S3 can be integrated, and (the inspection device S including) these elements can be manually portable.

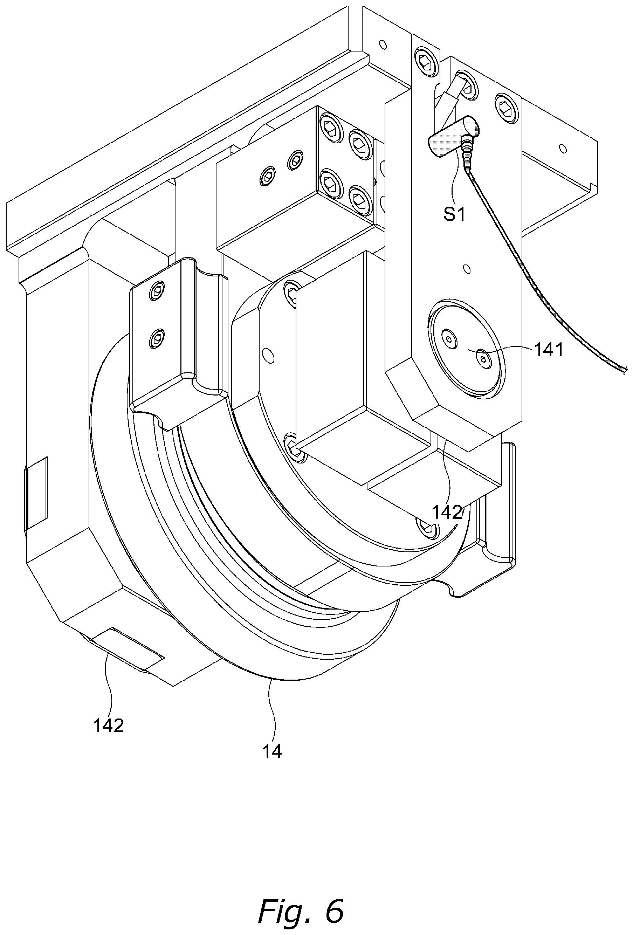

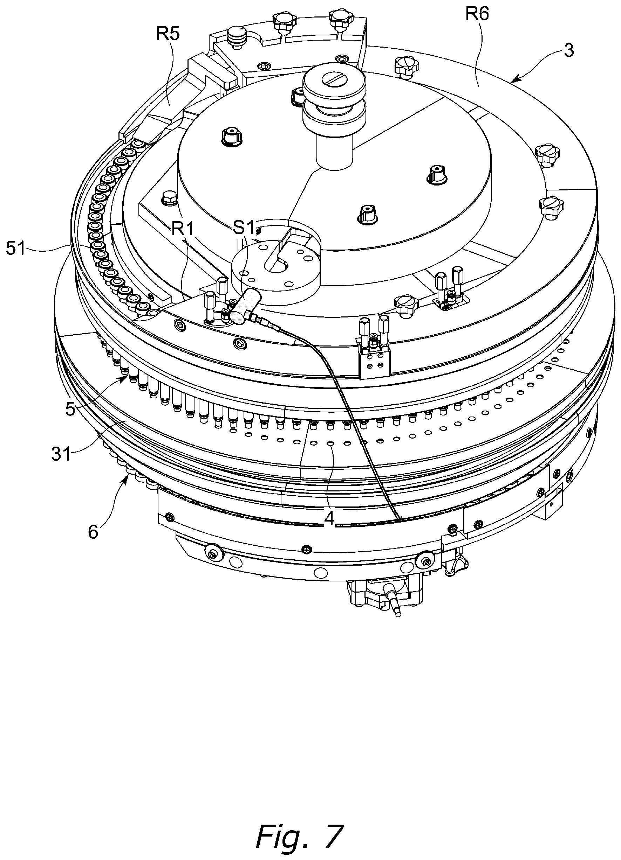

Specific examples of a member as a target of predictive maintenance in the molding machine A include a member constituting a roll part shown in Fig. 6 and a member constituting a rail part shown in Fig. 7. The roll part includes the compression rolls 12, 13, 14, and 15 configured to press the punches 5 and 6, a shaft 141 rotatably supporting each of the compression rolls 12, 13, 14, and 15, a bearing (e.g., a bearing interposed between a spindle hole in the center of each of the rolls 12, 13, 14, and 15 and the shaft 141 inserted through the spindle hole, not shown), and a block 142 supporting each end of the shaft 141.

While the molding machine A is in operation, a large load (external force, friction) is applied to each of the rolls 12, 13, 14, and 15, the shaft 141, the bearing, and the block 142. After the molding machine A has operated for a long period, these members may thus be deformed or destructed enough to impede production of normal molded products. When any member has a minute crack or scar, a microscopic strain, abrasion, excessive friction including defective lubrication, or the like (any of which is not yet deformed or destructed enough to impede production of normal molded products) as an indication before abnormal deformation or destruction of the member, a predetermined frequency band accordingly includes a component of sound or vibration having magnitude that does not appear in a normal state without any indication of abnormality. In this case, the molding machine A operates (including actually operation for production of originally intended molded products or any other trial operation) in a state where the AE sensor S1 included in the inspection device S is attached to such any member or a portion adjacent to the member, so that the AE sensor S1 captures any generated AE wave. Fig. 6 exemplarily shows a state where the AE sensor S1 is disposed in contact with or adjacent to the block 142 of the roll part of the substantial compression upper roll 14, and the AE sensor S1 senses and measures an elastic wave, that is, sound or vibration, generated from the roll part. Reference to an output signal of the AE sensor S1 enables checking an indication of abnormality occurred to any one of the rolls 12, 13, 14, and 15, the shaft 141, the bearing, and the block 142.

The rail part includes the cam rails R1, R2, R3, R4, R5, and R6 engaged with the heads 51 and 61 of the punches 5 and 6 and configured to guide motion of the punches 5 and 6.

While the molding machine A is in operation, a large load (external force, friction) is applied to each of the cam rails R1, R2, R3, R4, R5, and R6 (particularly the rails R1, R2, R4, and R5 configured to vertically shift the punches 5 and 6). These members may thus be deformed or destructed enough to impede production of normal molded products. When any member has a minute crack or scar, a microscopic strain, abrasion, excessive friction including defective lubrication, or the like (any of which is not yet deformed or destructed enough to impede production of normal molded products) as an indication before abnormal deformation or destruction of the member, a predetermined frequency band accordingly includes a component of sound or vibration having magnitude that does not appear in a normal state without any indication of abnormality. In this case, the molding machine A operates (including actually operation for production of originally intended molded products or any other trial operation) in a state where the AE sensor S1 included in the inspection device S is attached to such any member or a portion adjacent to the member, so that the AE sensor S1 captures any generated AE wave. Fig. 7 exemplarily shows a state where the AE sensor S1 is disposed in contact with or adjacent to the cam rail R1 configured to raise the upper punch 5, and the AE sensor S1 senses and measures an elastic wave, that is, sound or vibration, generated from the rail part. Reference to an output signal of the AE sensor S1 enables checking an indication of abnormality occurred to any one of the rails R1, R2, R3, R4, R5, and R6.

Members and components constituting the molding machine A are principally made of metal so as to easily propagate vibration in a frequency band including 100 kHz. The AE sensor S1 is configured to capture an audio signal in a frequency band (e.g., the band from 60 kHz to 150 kHz) higher than a human audible range. Particularly when the turret 3 and the punches 5 and 6 of the molding machine A are operating at relatively low speed, the AE sensor S1 is likely to detect an indication of abnormality leading to a future malfunction of the molding machine A, such as a microscopic crack or scar or a lubrication problem (e.g., excessive friction) of the roll part, the rail part, or any one of the punches 5 and 6. The audio signal does not necessarily propagate in the air but propagates in a member or a component of the molding machine A. The AE sensor S1 may be attached in a simple manner and is not strictly limited in an attachment direction of the AE sensor S1.

Examples of the controller S3 of the inspection device S include a programmable logic controller, as well as a microcomputer system, a personal computer, and a workstation each of which includes a processor, a memory, an auxiliary storage device (e.g., a nonvolatile memory such as a flash memory or a solid state drive (SSD)), an input/output interface, and the like. The controller S3 reads a program preliminarily stored in the auxiliary storage device into the processor via the memory, causes the processor to decode the program, and inspects the molding machine A.

The controller S3 determines in accordance with an AE wave signal measured by the AE sensor S1 whether any member constituting the molding machine A, particularly any member as an element of the roll part or the rail part has any indication of abnormality, and outputs information on a result of the determination.

Specifically, the controller S3 initially A/D converts the output signal of the AE sensor S1 and extracts a component in the predetermined frequency band by means of a band-pass filter configured to allow only the predetermined frequency band to pass through and block the other frequency bands, or adjusts a sampling frequency upon A/D conversion of the output signal of the AE sensor S1 to extract the component in the predetermined frequency band. Values obtained in accordance with the extracted component in the predetermined frequency band are compared with a determination threshold.

Examples of the value obtained in accordance with the component in the predetermined frequency band (to be compared with the determination threshold) include a maximum value (amplitude) of an amplitude spectrum in the predetermined frequency band, an average value, a moving average, or a median in a certain period (obtaining an average from a time series (of an absolute value) of an instantaneous value of the amplitude spectrum), a time integration value in the certain period (energy, integrating the time series (of the absolute value) of the instantaneous value of the amplitude spectrum), an effective value in the certain period (a root mean square value, a square root of a mean square value of the time series (of the absolute value) of the instantaneous value of the amplitude spectrum). When any specific member of the molding machine A has a minute crack or a microscopic strain as an indication of abnormality and sound or vibration due to such a defect is generated, the value obtained in accordance with the component in the predetermined frequency band contained in the output signal of the AE sensor S1 is to exceed the determination threshold. In this case, the controller S3 determines that an indication of abnormality has appeared to the specific member of the molding machine A. Otherwise, the controller 0 determines that no indication of abnormality has appeared to the specific member of the molding machine A.

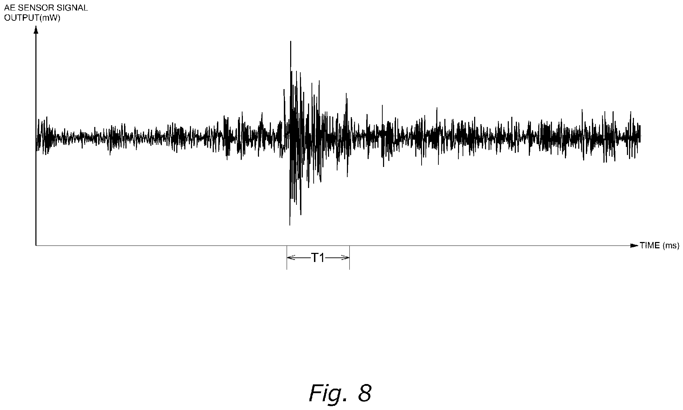

Fig. 8 indicates an AE wave signal measured by the AE sensor S1 in a case where a member constituting the molding machine A has a crack as an indication of abnormality. Fig. 8 includes a section T1 having appearance of a waveform exhibiting the indication of abnormality. The waveform has a sudden increase in amplitude and appears for a relatively short period. The amplitude increases enough to extend the crack, and has a time integration value that tends to increase as the crack has a larger area. The number of appearance of the waveform having a sudden increase in amplitude increases as the number of cracks increases. Such a waveform is certainly to appear repetitively with a cycle according to rotational speed of the molding machine A.

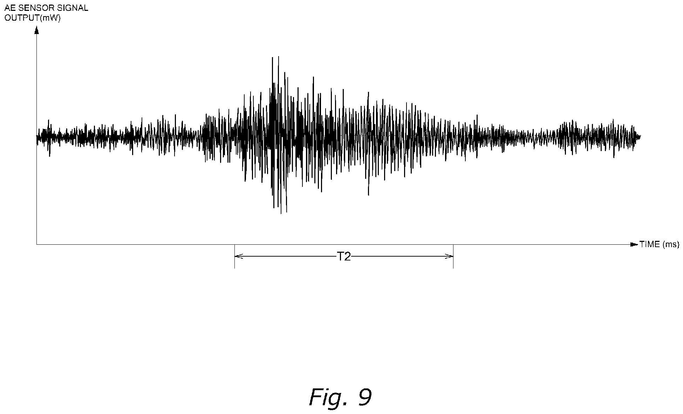

Fig. 9 indicates an AE wave signal measured by the AE sensor S1 in a case where a member constituting the molding machine A has abrasion or friction as an indication of abnormality. Fig. 9 includes a section T2 having appearance of a waveform exhibiting the indication of abnormality. The waveform has a continuously increasing amplitude and appears for a relatively long period. The amplitude has a time integration value that tends to increase as friction or abrasion has a larger amount. The amplitude has an effective value correlating with a coefficient of friction. Such a waveform is to appear repetitively with a cycle according to the rotational speed of the molding machine A.

An appropriate frequency band extracted from the output signal of the AE sensor S1, or the like and/or the determination threshold to be compared with the frequency band or the like may be varied in accordance with various conditions such as the type, shape, and size of the molded products produced by the molding machine A, the material for the molded products, the rotational speed of the turret 3 and the punches 5 and 6, and compression pressure for compression molding the molded products. The identical molding machine A can actually produce and indeed produces a plurality of types of molded products. The shape and the size of the molded products can be changed by exchanging the die bores (the plate or the die members of the die table 31) 4 as molds and punches 5 and 6. It is possible to appropriately adjust the powdery material for the molded products, the rotational speed of the turret 3 and the punches 5 and 6, and compression tableting pressure to the powdery material. The controller S3 of the inspection device S stores and retains in the auxiliary storage device the frequency band and the like to be extracted from the output signal of the AE sensor S1 (the frequency band to be allowed to pass through or to be blocked by the band-pass filter, the sampling frequency, a maximum amplitude, a calculation cycle (a length of a calculation period) of the time integration value or the effective value), and/or the determination threshold for each of the type, shape, and size of the molded products, the material for the molded products, the rotational speed of the turret 3 and the punches 5 and 6, the compression pressure for compression molding the molded products, or the like. The controller S3 reads from the auxiliary storage device the frequency band or the like and/or the determination threshold corresponding to the type or the like of the molded products currently produced by the molding machine A, and determines whether any member constituting the molding machine A has an indication of abnormality. The type or the like of the molded products produced by the molding machine A may be inputted to the controller S3 (or selected) by an operator who inspects the molding machine A, or may be estimated from a set value or an actually measured value of the rotational speed of the turret 3 and the punches 5 and 6 or compression tableting pressure stored and retained in the control unit 0 of the molding machine A and read by the controller S3.

Furthermore, in order to operate the inspection device S, in a case where an individual of the molding machine A as an inspection target is assumed to operate normally regardless of whether the individual is new (including a state immediately after inspection, maintenance, replacement of a worn member, or the like), an AE wave, that is, sound or vibration generated during operation of the molding machine A is preliminarily measured by the AE sensor S1. For example, measured is sound or vibration generated for a predetermined period (about 20 seconds) after the molding machine A starts operation. The auxiliary storage device of the controller S3 stores a measurement signal, a component itself in a predetermined frequency band extracted from the measurement signal, or a value (e.g., a maximum amplitude, an average value, a moving average, or a median of an amplitude in a certain period, a time integration value in the certain period, or an effective value in the certain period) obtained in accordance with the measurement signal or the component in the predetermined frequency band extracted from the measurement signal. Alternatively, calculated (e.g., multiplying a predetermined numerical value with addition of safety allowance) is a threshold for determination of whether any member constituting the molding machine A has an indication of abnormality from the value obtained in accordance with the measurement signal or the component in the predetermined frequency band extracted from the measurement signal, and the auxiliary storage device of the controller S3 stores the determination threshold. Information stored and retained in the auxiliary storage device of the controller S3 is used as the determination threshold for forthcoming inspection of the molding machine A.

The controller S3 of the inspection device S transmits, to a necessary output device, information including a result of determination of whether any member constituting the molding machine A has an indication of abnormality, to notify the operator of the molding machine A or any other staff of the determination result. Examples of the output device include a display, a lamp, a speaker, and a printer. That is, whether there is an indication of abnormality is displayed on a screen of the display, a fact that there is an indication of abnormality is displayed by lighting, unlighting, blinking, or changing light color, of the specific lamp, alert or voice indicating the fact that there is an indication of abnormality is emitted from the speaker, or whether there is an indication of abnormality is printed and outputted from the printer. The output device may be integrated with the controller S3.

The controller S3 may transmit the information including the result of the determination of whether any member constituting the molding machine A has an indication of abnormality to an external computer (e.g., a personal computer, a server computer, or a mobile phone terminal) through an electric communication line including a mobile phone network or the internet. This enables checking a current state of the molding machine A at a place remote from a production site equipped with the molding machine A. To achieve this, the controller S3 is preliminarily equipped with a network interface card (NIC) for connection to a wired local area network (LAN), or a transceiver for connection to a short-distance wireless communication network such as a wireless LAN, the mobile phone network, a WiMAX (registered trademark) network, or the Bluetooth (registered trademark). The controller S3 may transmit to the external computer each time upon acquisition of information, or may collectively transmit (batch processing) information each predetermined period (e.g., every day).

The controller S3 may determine whether any member constituting the molding machine A has an indication of abnormality in accordance with an artificial intelligence (AI) technique. The AI may be configured in various manners, and there may be adopted a model achieved by reading supervised learning data and learning (deep learning artificial intelligence). The learning data includes a pair of an output signal of the AE sensor S1 and a label indicating whether any member constituting the molding machine A has an indication of abnormality upon output of the signal. Output signals of the AE sensor S1 are collected in each of a case where any member constituting the molding machine A has no indication of abnormality and a case where any member constituting the molding machine A has an indication of abnormality, to prepare bulk learning data obtained by labelling the output signals. The learning data is read into and learned by a neural network to build a learned model in which any output signal of the AE sensor S1 during operation of the molding machine A inputted to an input layer reaches an output layer via an intermediate layer (hidden layer) and is outputted as information indicating whether any member constituting the molding machine A has an indication of abnormality.

There may alternatively be adopted an abnormality detecting learned model using an autoencoder. This model may be built by learning through collection only of a large number of output signals of the AE sensor S1 in the case where any member constituting the molding machine A has no indication of abnormality. In the learned model thus obtained, when any output signal of the AE sensor S1 during operation of the molding machine A is inputted to an input layer regardless of whether any member constituting the molding machine A has an indication of abnormality, the output signal of the AE sensor S1 in the case where any member constituting the molding machine A has no indication of abnormality is to be outputted from an output layer. Accordingly, a difference between input and output being less than the determination threshold will lead to determination that no member constituting the molding machine A has an indication of abnormality, whereas the difference being more than the determination threshold will lead to determination that any member constituting the molding machine A has an indication of abnormality.

The AI leaned model may be prepared for each of the type, shape, or size of the molded products, the material for the molded products, the rotational speed of the turret 3 and the punches 5 and 6, the compression pressure for compression molding the molded products, or the like, to be used for determination.

The invention is not limited to the embodiment detailed above. For example, members to be determined whether there is an indication of abnormality in the molding machine A are not limited to the members constituting the roll part and the rail part. The die members as molds of the molded products or the punches 5 and 6 may be similarly determined whether there is an indication of abnormality.

Moreover, whether members constituting a machine have an indication of abnormality may be determined on machines other than the compression molding machine A, such as a mixing machine configured to mix a plurality of types of powdery materials, and general machines relevant to solid dosages including a granulator and a particle size selector configured to crush and granulate into a desired particle diameter.

Moreover, specific configurations of the respective portions can be modified in various manners without departing from the spirit of the invention.

The invention provides an inspection device configured to detect an indication of abnormality occurred to a predetermined member of a machine used for production of a molded product from a powdery material, the inspection device including: an acoustic emission (AE) sensor detachably attached to the predetermined member of the machine or a portion adjacent to the predetermined member; and a controller configured to receive a signal outputted from the AE sensor disposed at the predetermined member of the machine or the portion adjacent to the predetermined member during operation (including actual operation to produce an originally intended molded product, or other trial operation) of the machine, determine whether the predetermined member has an indication of abnormality in accordance with the signal, and output information on a result of determination.

## Claims

1. An inspection device (S) configured to detect an indication of abnormality occurred to a predetermined member (14, 141, 142, R1) of a machine (A) used for production of a molded product from a powdery material, the inspection device (S) comprising:
an AE sensor (S1) detachably attached to the predetermined member (14, 141, 142, R1) of the machine (A) or a portion adjacent to the predetermined member (14, 141, 142, R1); and
a controller (S3) configured to receive a signal outputted from the AE sensor (S1) disposed at the predetermined member (14, 141, 142, R1) of the machine (A) or the portion adjacent to the predetermined member (14, 141, 142, R1) during operation of the machine (A), determine whether the predetermined member (14, 141, 142, R1) has an indication of abnormality in accordance with the signal, and output information on a result of determination.

2. The inspection device (S) according to claim 1, wherein
the machine (A) is a rotary compression molding machine (A) including a die table (31) having die bores (4) penetrating the die table and an upper punch (5) and a lower punch (6) slidably retained above and below each of the die bores (4), the compression molding machine (A) configured to horizontally rotate the die table (31) and the punches (5, 6) to compression mold a powdery material filled in the die bore (4) when the upper punch (5) and the lower punch (6) being paired pass between an upper roll (12, 14) and a lower roll (13, 15),
the member is the roll (14) in the compression molding machine (A) or a member (141, 142) rotatably supporting the roll,
the AE sensor (S1) is detachably attached to the roll (14) in the compression molding machine (A), the member (141, 142) rotatably supporting the roll, or a portion adjacent to the roll (14) or the member (141, 142) rotatably supporting the roll, and
the controller (S3) receives a signal outputted from the AE sensor (S1) during operation of the compression molding machine (A), determines whether the roll (14) or the member (141, 142) rotatably supporting the roll has an indication of abnormality in accordance with the signal, and outputs information on a result of determination.

3. The inspection device (S) according to claim 1, wherein
the machine (A) is a rotary compression molding machine (A) including a die table (31) having die bores (4) penetrating the die table and an upper punch (5) and a lower punch (6) slidably retained above and below each of the die bores (4), the compression molding machine (A) configured to horizontally rotate the die table (31) and the punches (5, 6) to compression mold a powdery material filled in the die bore (4) when the upper punch (5) and the lower punch (6) being paired pass between an upper roll (12, 14) and a lower roll (13, 15),
the member is the roll (14) of the compression molding machine or a member (141, 142) rotatably supporting the roll,
the member is a cam rail (R1) configured to guide the punches (5, 6) while vertically shifting the punches in the compression molding machine (A),
the AE sensor (S1) is detachably attached to the cam rail (R1) configured to guide the punches (5, 6) while vertically shifting the punches in the compression molding machine (A), and
the controller (S3) receives a signal outputted from the AE sensor (S1) during operation of the compression molding machine (A), determines whether the cam rail (R1) has an indication of abnormality in accordance with the signal, and outputs information on a result of determination.

4. The inspection device (S) according to claim 1, wherein
the controller (S3) stores and retains a determination threshold assuming, as a reference, sound or vibration measured by the AE sensor (S1) when an individual of the machine (A) as an inspection target is new or operates normally, receives a signal outputted from the AE sensor (S1) disposed at the predetermined member (14, 141, 142, R1) of the machine (A) or the portion adjacent to the predetermined member (14, 141, 142, R1) during operation of the machine (A), and determines whether the member has an indication of abnormality by comparison between a value obtained in accordance with the signal and the determination threshold.

5. The inspection device (S) according to claim 1, further comprising a display configured to display on a screen or a printer configured to print, the information outputted from the controller (S3) on the result of the determination of whether the predetermined member (14, 141, 142, R1) has an indication of abnormality.

6. The inspection device (S) according to any one of claims 1 to 5, wherein the inspection device is manually portable along with the AE sensor (S1) and the controller (S3).
